# EUROPÄISCHE PATENTSCHRIFT

(11) **EP 0 584 510 B1**
(45) Veröffentlichungstag und Bekanntmachung des Hinweises auf die Patenterteilung: **23.09.1998**
(21) Anmeldenummer: 93111243.7
(22) Anmeldetag: 09.07.1993
(51) Int. Cl.: G08B 1/00, G01S 17/02, G01V 8/12

(54) **Aus einem Sender und einem Empfänger bestehende Einrichtung zum Erfassen von Gegenständen**
Article detection device using a transmitter and a receiver
Dispositif de détection d'articles utilisant un émetteur et un récepteur

(30) Priorität: 11.06.1993 DE 4319451; 05.11.1992 DE 4237311; 25.08.1992 DE 4228112
(43) Veröffentlichungstag der Anmeldung: 02.03.1994
(73) Patentinhaber: Leuze electronic GmbH + Co., D-73277 Owen (DE)
(72) Erfinder: Ollhäuser,Helmut, D-73266 Bissingen/Teck (DE)

(56) Entgegenhaltungen:
- EP-A- 0 456 482
- WO-A-92/06387
- DE-A- 3 125 728
- DE-A- 4 141 469
- DE-U- 9 010 998

## Beschreibung

Die Erfindung betrifft eine Einrichtung gemäß dem Oberbegriff des Anspruchs 1.

Eine derartige Einrichtung ist aus der WO 92/06387 bekannt. Diese Einrichtung ist als optische Sensoranordnung zur Feststellung von reflektierenden Gegenständen ausgebildet und weist einen Impulslichtsender und einen Lichtempfänger, an den eine Auswerteschaltung mit einem Impulsgeber und einer Empfangssignalverarbeitsungsstufe angeschlossen ist.

Die Empfangssignaleverarbeitungsstufe gibt nur dann ein Gegenstands-Feststellungssignal ab, wenn die vom Lichtempfänger aufgenommenen Lichtimpulse oberhalb einer Schaltschwelle liegen.

Parallel zur Empfangssignalverarbeitungsstufe weist die Auswerteschaltung eine Sendeimpuls-Beeinflussungs- und -auslösestufe auf, welche bei Feststellung eines veränderlichen Störsignals den nächsten Lichtsendeimpuls erst nach Beendigung des veränderlichen Störsignals auslöst.

Der Erfindung liegt die Aufgabe zugrunde eventuell auftretende Störsignale unwirksam zu machen.

Zur Lösung dieser Aufgabe sind die Merkmals des Anspruchs 1 vorgesehen.

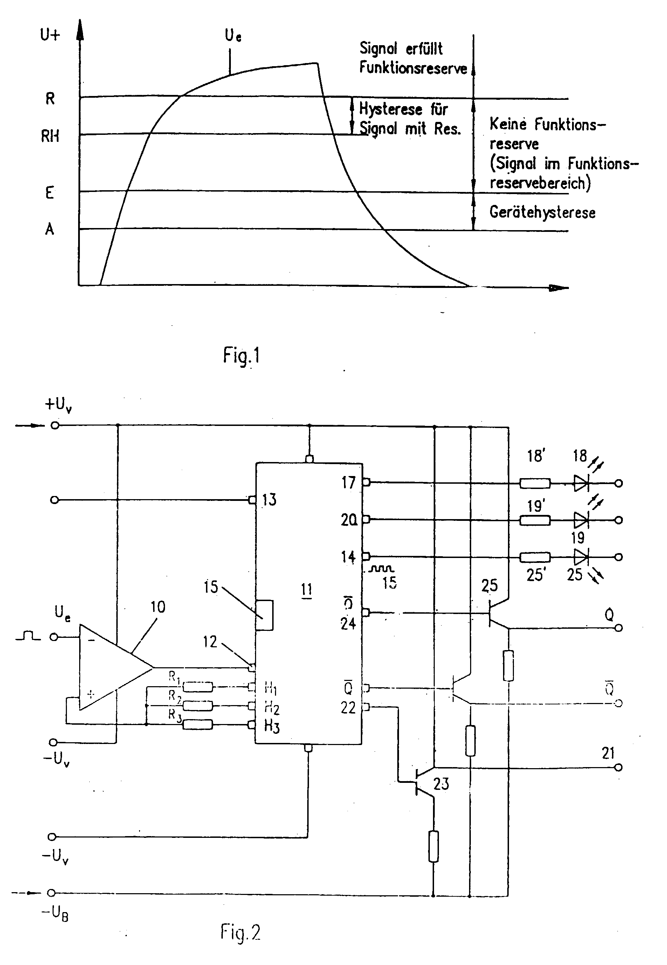

Zweckmäßige Ausgestaltungen sind in den auf den Anspruch 1 rückbezogenen abhängigen Ansprüchen charakterisiert. Die Erfindung wird im nachstehenden anhand der Zeichnungen erläutert.
- Es zeigen: Fig. 1: eine qualitative Darstellung von vier abzufragenden Signalpegeln,
- Fig. 2: einen externen Komparator in schaltungstechnischer Zuordnung zu einem Single-chip Microcontroller,
- Fig. 3: eine beispielsweise Zuordnung der die Vergleichsspannungen am Komparator aktivierenden Pegel des Microcontrollers zu den vom Komparator zu testenden Signalpegeln,
- Fig. 4: ein Impulsdiagramm für die Ausgänge des Senders und des Komparators,
- Fig. 5: ein erstes Impulsdiagramm für die Ausgänge des Senders und die Signale eines Fremdsenders,
- Fig. 6: ein zweites Impulsdiagramm für die Ausgänge des Senders und die Signale eines Fremdsenders.

Wie aus Figur 1 ersichtlich ist, sind dem beispielsweise im Empfänger einer Reflexionslichtschranke generierten Empfangssignal Uₑ vier Signal-Pegel zugeordnet. Dies sind im einzelnen der Ausschaltpegel A, der Einschaltpegel E, der Reserve-Hysteresepegel RH und der Reservepegel R.

Diese Pegel werden, wie Fig. 2 zeigt, von einem Komparator 10, dessen invertierendem Eingang das Empfangssignal Uₑ zugeführt wird, in Verbindung mit einem Microcontroller 11 vorzugsweise in Form eines Single-chip-controllers der Fa. Microchip getestet. Dabei ist der Ausgang des an einer Spannung + Uᵥ liegenden Komparators 10 an den bzw. einen Signaleingang 12 des Microcontrollers 11 angeschlossen, und mit dem nicht invertierenden Eingang des Komparators 10 sind beim Ausführungsbeispiel drei separate Referenzwiderstände R₁, R₂, R₃ mit unterschiedlichen Widerstandswerten verbunden, die über die korrespondierenden Ausgänge H₁, H₂ und H₃ des Microcontrollers 11 aktiviert werden, wodurch sich verschiedene Vergleichsspannungen ergeben.

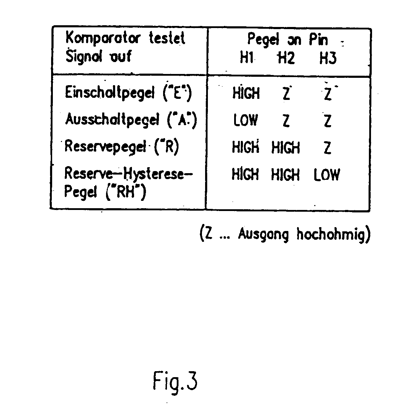

Die Zuordnung der Signalzustände der Ausgänge H₁, H₂ und H₃ zu den zu testenden Signalpegeln A, E, RH und R ist der Figur 3 zu entnehmen. Bei einer sehr begrenzten Länge des Sendeimpulses kann mit dieser Beschaltung ein Empfangssignal jeweils nur auf einen der vier genannten Signalpegel getestet werden. Das heißt, die Pegelprüfung erfolgt in diesem Fall seriell. Es besteht jedoch auch die Möglichkeit, einer quasi-parallelen Auswertung durch Mehrfachabfrage während eines Eingangssignals. Die Pegel können auch parallel abgeprüft werden, beispielsweise mit Hilfe eines zweiten Komparators.

Bei am Aktivierungseingang 13 des Microcontrollers 11 anliegenden Pegel "High" wird am Sender-Ausgang 14 das Sendesignal 15 beispielsweise mit einer Impulslänge τ von einigen Mikrosekunden und einer ca. 30 mal längeren Periodendauer T ausgegeben. Das Sendesignal 15 wird über einen Widerstand 25' einer LED 25 zugeführt.

An den Ausgang (PIN) 17 des Mikrocontrollers 11 ist eine Lumineszenz-Diode 18 über einen Widerstand 18' angeschlossen, welche die Betriebsbereitschaft der Reflexionslichtschranke (anliegende Versorgungsspannung) bzw. einer Ultraschallschranke anzeigt. Die Farbe der LED 18 ist beispielsweise grün. Den Zustand der Licht- bzw. Überwachungsstrecke indiziert eine LED 19, die über einen Widerstand 19' an den Ausgang (PIN) 20 des Microcontrollers 11 angeschlossen ist und bei unterbrochener Lichtstrecke (kein Signal ) ausgeschaltet ist.

Die bei nicht unterbrochener Lichtstrecke z.B. gelb leuchtende LED 19 blinkt bei einem Empfangssignal ohne Reserve mit einer Frequenz von ca. 10 Hz. Dies bedeutet eine Vorwarnsignalgabe. Je nach Wahl wird nach einem, zwei oder mehr Empfangssignalen ohne Reserve der Kontrollausgang 21 nach ein- oder mehrmaliger Abdunkelung über den Ausgang 22 des Microcontrollers 11 und einen Transistorschalter 23 gesetzt, wodurch eine optische (z.B. höhere Blinkfrequenz) und/oder eine akustische Warnsignalabgabe gegebenenfalls in Verbindung mit einem Abschaltvorgang erfolgt. Sobald ein Signal mit Reserve detektiert wird, wird der Kontrollausgang 21 zurückgesetzt. Der Ausgang Q wird bei Reflexion (freier Lichtweg) durch den Ausgang (PIN) 24 des Microcontrollers über einen Transistorschalter 25 gesetzt. Der Ausgang Q ist der zu Q inverse Ausgang.

Das Empfangssignal Uₑ kann auch an den invertierenden Eingang des Komparators 10 angelegt und dementsprechend können die Widerstände R_{I}, R_{II}, R_{III} an dessen nicht invertierenden Eingang angeschlossen werden. Hierdurch kehrt sich lediglich die Wirkungsrichtung um.

Wird der Einschaltpegel E beispielsweise von zwei aufeinanderfolgenden Eingangssignalen erfüllt, so wird die Reflexionslichtschranke eingeschaltet. Bei z. B. zwei aufeinanderfolgenden fehlenden Impulsen am Ausgang des Komparators 10 wird die Lichtschranke ausgeschaltet. Nach dem Einschalten der Reflexionslichtschranke wird im nächsten Sendezyklus der Reservepegel RS geprüft. Erreicht dieser den erforderlichen bzw. vorgegebenen Wert, so erfolgt im nächsten Zyklus die Umschaltung auf den Reserve-Hysterese-Pegel RH und dessen Prüfung.

Bei fehlender Signalreserve RS erfolgt das Umschalten auf den Ausschaltpegel A. Ist dieser erfüllt, wird anschließend wieder auf Reserve RS getestet. Bei z. B. dreimaliger Abdunkelung, ohne daß ein Signal mit Reserve aufgetreten ist, wird wie bereits erwähnt worden ist, der Kontrollausgang 21 des Mikrocontrollers 11 aktiv.

Den Ausgängen Q, Q und 21 kann ein gemeinsamer Kurzschluß-Eingangspin des Mikrocontrollers 11 zugeordnet sein. Ein High-Signal an diesem PIN führt dann zum Abschalten aller drei Ausgänge.

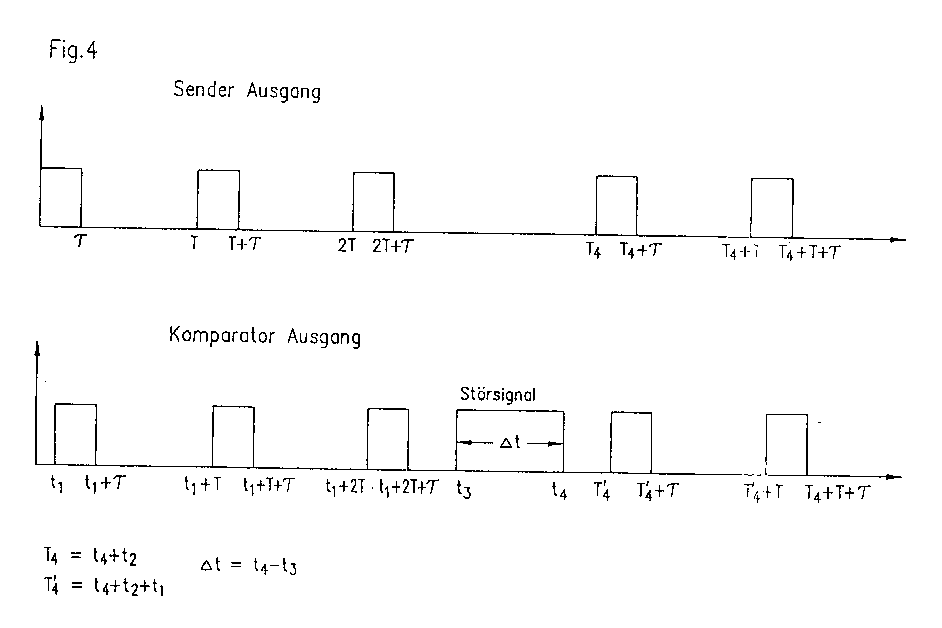

Die Arbeitsweise der erfindungsgemäßen Einrichtung zur Störsignalunterdrückung ist insbesondere aus Fig. 4 ersichtlich. Dort sind die Sendesignale 15 und die am Signaleingang 12 des Microcontrollers 11 anstehenden Empfangssignale aufgetragen. Solange die Reflexionslichtschranke fehlerfrei arbeitet, d. h. solange keine internen oder externen Störsignale am Komparator 10 anliegen, werden Sendesignale 15 mit der Impulslänge τ und der Periodendauer T ausgesandt. Jedem Sendeimpuls ist ein Empfangsimpuls des Empfangssignals zugeordnet. Er weist im wesentlichen dieselbe Periodendauer τ wie der Sendeimpuls auf und wird bezüglich des Sendeimpulses mit einer Verzögerungszeit t₁ im Microcontroller 11 registriert. Die Verzögerungszeit t₁ ergibt sich aus den Ansprechzeiten der verwendeten elektronischen Bauelemente.

Ein Störsignal beispielsweise eines Fremdsenders wird im Microcontroller 11 dadurch erkannt, daß es nicht innerhalb der Verzögerungszeit t₁ sondern mit einer größeren Verzögerung auf einen Sendeimpuls folgt. Die Amplitude des Störsignals ist hierbei unbedeutend.

Ist ein Störsignal vorhanden, so wird im Microcontroller 11 die Aussendung der Sendeimpulse solange unterbrochen, bis das Störsignal am Komparator 10 nicht mehr anliegt. Hierzu wird vorzugsweise der Signaleingang 12 über die Software des Microcontrollers 11 abgefragt.

Sobald das Störsignal am Signaleingang 12 nicht mehr anliegt, erfolgt über die Software des Microcontrollers 11 die Freigabe zur Aussendung von Sendeimpulsen. Aufgrund der Ansprechzeiten der verwendeten Bauteile, erfolgt die Aussendung der Sendeimpulse nicht unmittelbar nach Beendigung des Störsignals sondern erst nach einer Verzögerungszeit t₂. Bis zum Auftreten des nächsten Störsignals werden Sendeimpulse mit der Periodendauer T und der Impulsdauer τ ausgesandt, wobei auf jeden Sendeimpuls ein Empfangsimpuls mit der Verzögerungszeit t₁ folgt.

Mit dieser Vorrichtung können Störimpulse von beliebiger Dauer (Δt) und Amplitude eliminiert werden. Die Störungen können zum einen durch interne Störungen wie beispielsweise Bauteilfehler hervorgerufen werden. Zum anderen können die Störungen auf externen Einflüssen, wie beispielsweise Fremdlichteinstrahlung bei Lichtschranken, beruhen.

Insbesondere für den Fall, daß die Störsignale periodisch auftreten, kann die beschriebene Einrichtung in bestimmten Fällen fehlerhaft arbeiten. Sobald der Störimpuls nicht mehr am Komparator 10 anliegt, werden in den Zeitabständen T₄ + nT, wobei n = 0, 1, 2, 3...., Sendeimpulse ausgesandt. Tritt während der Dauer eines dieser Sendeimpulse ein weiterer Störimpuls auf, so kann diesem Störimpuls nicht mehr ausgewichen werden.

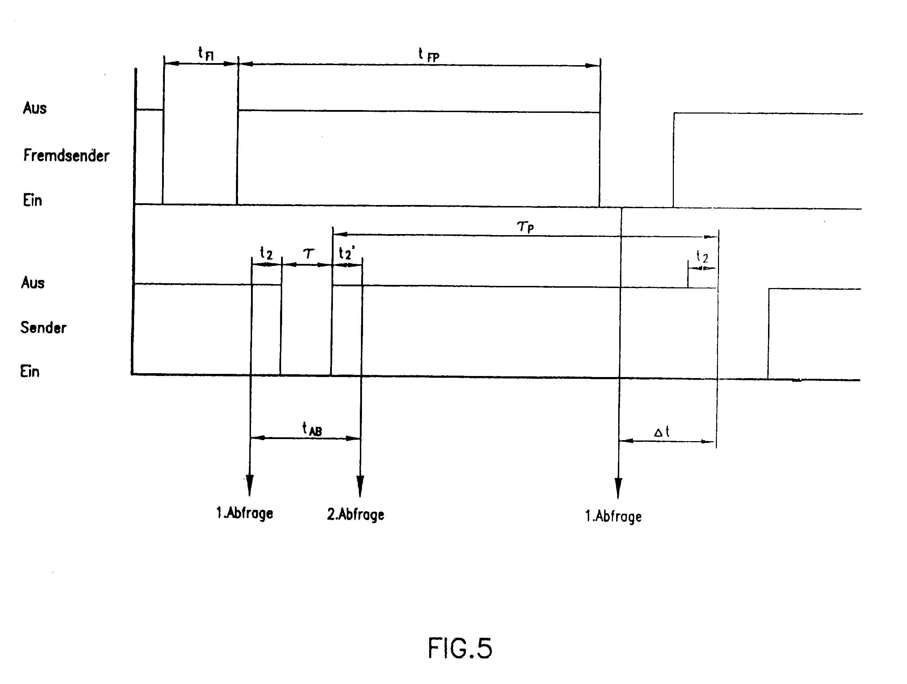

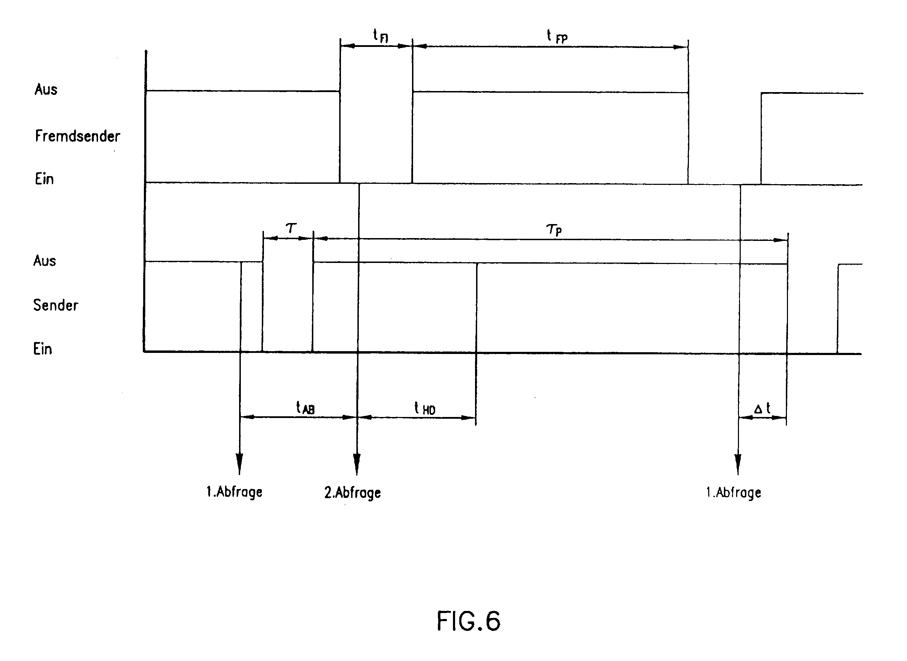

Um diesen Nachteil zu vermeiden, ist zusätzlich zu der oben beschriebenen ersten Abfrage des Komparators 10 auf Anliegen eines Störimpulses unmittelbar nach Aussenden des Sendeimpulses eine zweite Abfrage des Komparators 10 auf Anliegen eines Störimpulses vorgesehen. Die Arbeitsweise der erfindungsgemäßen Einrichtung ist in den Figuren 5 und 6 beschrieben. Dort sind die Sendesignale 15 der Einrichtung sowie die auf die Einrichtung auftreffenden Störsignale dargestellt.

Der ungestörte Betrieb der Einrichtung entspricht dem Betrieb der Einrichtung gemäß der DE-A-42 37 311. Auch die erste Abfrage des Komparators 10 auf Anliegen eines Störsignals entspricht der oben beschriebenen Abfrage: Sobald das Störsignal am Signaleingang 12 nicht mehr anliegt, wird der Sendeimpuls nach der Verzögerungszeit t₂' ausgesandt.

Zusätzlich wird nach einer Zeit t₂ nach dem Aussenden des Sendeimpulses eine zweite Abfrage des Komparators 10 durchgeführt. Das Zeitintervall t_{AB} zwischen den beiden Abfragen beträgt somit t_{AB} = t₂ + τ + t₃. Damit periodisch auftretende Störsignale durch die beiden Abfragen laufend erfaßt werden können, erfolgen die beiden Abfragen fortlaufend jeweils vor bzw. nach Aussenden eines Sendeimpulses.

Die Resultate der Abfragen werden dazu verwendet, die Periodendauer T, mit der die Sendeimpulse ausgesendet werden, so an die Impulsfolge des Fremdsenders anzupassen, daß die Sendeimpulse jeweils in den Sendepausen des Fremdsenders ausgesandt werden.

Die in den Figuren 5 und 6 dargestellten Störimpulse weisen eine Pulsdauer t_{FI} auf. Die Pulspausen betragen t_{FP}. Die Periodendauer beträgt demnach T_{F} = t_{FI} + t_{FP}. Die Periodendauer der Sendeimpulse beträgt T = τ + τ_{P}, solange keine Störsignale auftreten, Treten jedoch Störsignale mit der Periodendauer T_{F} auf, die verschieden von der Periodendauer T ist, so würden in bestimmten Zeitabständen fortlaufend Störungen durch Störimpulse, die mit den Sendeimpulsen zusammenfallen, auftreten.

Um derartige Störungen zu vermeiden, wird die Periodendauer T in Abhängigkeit der Periodendauer T_{F} und der Pulsdauer t_{FP} der Störimpulse angepaßt.

Hierzu wird die während der ersten Abfrage am Ende der Sendepause ermittelte Dauer des Störimpulses Δ t zur Periodendauer T addiert, wodurch diese Sendepause um Δ t vergrößert wird. Die Vergrößerung der Sendepause erfolgt jeweils nur dann, wenn bei der ersten Abfrage ein Störsignal registriert wurde.

Desweiteren wird die Sendepause um die Zeit t_{HD} erhöht, falls während der zweiten Abfrage ein Störsignal am Komparator anliegt. Im Gegensatz zur Sendepausenverlängerung, die durch die 1. Abfrage ausgelöst wird, ist in diesem Fall t_{HD} von der Dauer t_{FI} des Störimpulses unabhängig. Die Zeit t_{HD} ist im wesentlichen gleich dem Zeitintervall t_{AB} zwischen den Abfragen. Vorzugsweise gilt die Relation t_{HD} = t_{AB} + t₅, wobei die Zeit t₅ den Rechenzeitaufwand im Mikrocontroller 11 zur Abarbeitung der beiden Abfragen darstellt.

Im Ergebnis sind für die Periodendauer der Sendeimpulse vier Fälle zu betrachten.

Falls sowohl während der ersten als auch während der zweiten Abfrage kein Störimpuls am Komparator 10 anliegt, beträgt die Periodendauer unverändert T.

Falls nur während der ersten Abfrage ein Störsignal registriert wird, beträgt die Periodendauer T + Δ t. Falls nur während der zweiten Abfrage ein Störsignal registriert wird, beträgt die Periodendauer T + t_{HD}. Falls bei beiden Abfragen Störsignale registriert werden, beträgt die Periodendauer T +t_{HD} + Δt.

Durch diese Variation der Periodendauern kann auf Störsignalfolgen nahezu beliebiger Form und Frequenz so ausgewichen werden, daß die Sendeimpulse fortlaufend in die Sendepausen des Fremdsenders fallen, so daß Störungen der Einrichtungen vermieden werden können.

Für den Fall, daß die Sendefrequenz f_{F} = 1/T_{F}; größer als die Sendefrequenz f = 1/T der Einrichtung ist, wird nach einer durch das Verhältnis der Frequenzen bestimmten Zeit das Störsignal von der zweiten Abfrage erfaßt. Daraufhin wird die Periodendauer T + t_{HD} erhöht, so daß bei einem der nächsten Abfragezyklen das Störsignal von der ersten Abfrage erfaßt wird. Dann wird die Periodendauer auf T + Δt gesetzt, wobei Δt gleich dem Anteil der Dauer t_{FI} des Störsignals, der über die 1. Abfrage erfaßt wird, ist.

Im Ergebnis erfolgt eine Anpassung der Sendefrequenz an die Frequenz der Störsignale, so daß Störungen des Betriebes der Einrichtung vermieden werden.

Für den Fall, daß die Sendefrequenz f_{F} kleiner als die Sendefrequenz f der Einrichtung ist, werden die Störimpulse laufend von der ersten Abfrage erfaßt. Wiederum erfolgt in Abhängigkeit der Dauer t_{FI} des Störsignals eine Anpassung der Periodendauer auf den Wert T + Δt.

In einer vorteilhaften Ausführungsform können mehrere Sensoren zu einer Mehrfachanordnung zur Raumüberwachung zusammengefaßt sein. Für den Fall, daß es sich um optische Sensoren, beispielsweise Lichtschranken handelt,ist die Mehrfachanordnung als Lichtgitter ausgebildet. Die Abstände der einzelnen Sensoren zueinander sind so gewählt, daß der zu überwachende Raumbereich lückenlos abgetastet wird. Hierzu ist es oftmals notwendig, daß die Sensoren in relativ geringem Abstand zueinander angeordnet sind.

In diesem Fall kann nicht ausgeschlossen werden, daß Signale eines Sensors auch von benachbarten Sensoren empfangen werden. Um derartige Störungen zu vermeiden, werden bei bekannten Lichtgittern die Sensoren über eine externe Steuerung synchronisiert, so daß die Sensoren in bestimmten Zeitintervallen nacheinander aktiviert werden. Dies erfordert jedoch einen erheblichen konstruktiven Aufwand. Bei einem Lichtgitter, das aus den erfindungsgemäßen Sensoren besteht, ist eine externe Synchronisation nicht notwendig, da jeder Sensor eine Einrichtung zur Elimination der Störsignale aufweist.

Insbesondere ist vorteilhaft, daß die Elimination der Störsignale durch eine Änderung der Sendefrequenz erfolgt, so daß die Aussendung der Sendeimpulse der ersten Lichtschranke in den Sendepausen der anderen Lichtschranken erfolgt. Dies führt im Ergebnis zu einem sich selbst synchronisierenden Lichtgitter. Dies bedeutet zum einen eine erhebliche Einsparung des elektronischen Aufwands eines Lichtgitters. Zum anderen können einzelne Sensoren flexibel und zeitsparend zu einem Lichtgitter kombiniert werden.

## Patentansprüche

1. Aus einem Sender und einem Empfänger bestehende Einrichtung zum Erfassen von Gegenständen, bei der das Empfangssignal wenigstens einem Komparator (10) zugeführt wird, der den Pegel des Empfangssignals jeweils hinsichtlich seiner Ein- und Ausschaltbedingung überprüft, wobei ein Sendeimpuls jeweils erst nach einer ersten Abfrage des Komparators (10) auf Anliegen eines Störsignals und bei Nichterkennung eines solchen Signals ausgegeben wird, dadurch gekennzeichnet, daß der Ausgang des Komparators (10) an einen Signaleingang (12) eines nach seiner Aktivierung die Sendeimpulse erzeugenden Microcontrollers (11) angeschlossen ist und dem Vergleichseingang des Komparators zeitlich nach einander verschiedene vergleichspegel zugeführt werden, die über mit einem Eingang des Komparators (10) verbundene und von korrespondierenden Schaltausgängen (H₁, H₂, H₃) des Microcontrollers (11) aktivierte Widerstände (R₁, R₂, R₃) erzeugt werden.

2. Einrichtung nach Anspruch 1, dadurch gekennzeichnet, daß nach Aussenden des Sendeimpulses eine zweite Abfrage des Komparators (10) erfolgt und das Zeitintervall bis zum Aussenden des nächsten Sendeimpulses in Abhängigkeit von der Erkennung von Störsignalen während der Abfragen im Mikrocontroller (11) eingestellt wird.

3. Einrichtung nach Anspruch 1 oder 2, dadurch gekennzeichnet, daß die erste Abfrage des Komparators (10) bei vorhandenem Störsignal so lange wiederholt wird, bis kein Störsignal mehr anliegt.

4. Einrichtung nach einem der Ansprüche 1 - 3, dadurch gekennzeichnet, daß im Microcontroller (11) die Zeit Δt, während der das Störsignal bei der ersten Abfrage anliegt, gespeichert wird.

5. Einrichtung nach einem der Ansprüche 2 - 4, dadurch gekennzeichnet, daß das Zeitintervall T zwischen dem Aussenden zweier Sendeimpulse um das Zeitintervall Δt vergrößert wird, falls bei der ersten Abfrage ein Störsignal der Dauer Δt anliegt und falls bei der zweiten Abfrage kein Störsignal anliegt.

6. Einrichtung nach einem der Ansprüche 2 - 5, dadurch gekennzeichnet, daß das Zeitintervall zwischen dem Aussenden zweier Sendeimpulse um das Zeitintervall t_{HD} + Δt vergrößert wird, falls bei der ersten Abfrage ein Störsignal der Dauer Δt anliegt und falls bei der zweiten Abfrage ein Störsignal anliegt.

7. Einrichtung nach Anspruch 6, dadurch gekennzeichnet, daß das Zeitintervall t_{HD} im wesentlichen gleich dem Zeitintervall zwischen dem Ende der ersten Abfrage und dem Beginn der zweiten Abfrage ist.

8. Einrichtung nach einem der Ansprüche 1 - 7, gekennzeichnet durch deren Mehrfachanordnung zur Raumüberwachung.

## Claims

1. Equipment consisting of a transmitter and a receiver and being for the detection of objects, in which equipment the received signal is fed to at least one comparator (10), which checks the level of the received signal each time in respect of its switched-on and switched-off condition, wherein a transmitted pulse is issued each time only after a first interrogation of the comparator (10) in respect of the presence of an interference signal and on non-recognition of such a signal, characterised thereby, that the output of the comparator (10) is connected to signal input (12) of a microcontroller (11) generating the transmitted pulses after its activation and different comparison levels are fed one after the other in time to the comparison input of the comparator by way of resistors (R₁, R₂, R₃) connected with an input of the comparator (10) and activated by corresponding switch outputs (H₁, H₂, H₃) of the microcontroller (11).

2. Equipment according to claim 1, characterised thereby, that a second interrogation of the comparator (10) takes place after emission of the transmitted pulse and the time interval before the emission of the next transmitted pulse is set in the microcontroller (11) in dependence on the recognition of interference signals during the interrogations.

3. Equipment according to claim 1 or 2, characterised thereby, that the first interrogation of the comparator (10) is repeated in the presence of an interference signal until no interference signal is present any longer.

4. Equipment according one of the claims 1 to 3, characterised thereby, that the time Δt, during which the interference signal is present during the first interrogation, is stored in the microcontroller (11).

5. Equipment according one of the claims 2 to 4, characterised thereby, that the time interval T between the emission of two transmitted pulses is increased by the time interval Δt in case an interference signal of the duration Δt is present during the first interrogation and in case no interference signal is present during the second interrogation.

6. Equipment according one of the claims 2 to 4, characterised thereby, that the time interval between the emission of two transmitted pulses is increased by the time interval t_{HD} + Δt in case of the duration Δt is present during the first interrogation and in case an interference signal is present during the second interrogation.

7. Equipment according to claim 6, characterised thereby, that the time interval t_{HD} is substantially equal to the time interval between the end of the first interrogation and the beginning of the second interrogation.

8. Equipment according one of the claims 1 to 7, characterised by its multiple arrangement for space monitoring.

## Revendications

1. Dispositif de détection d'articles constitué d'un émetteur et d'un récepteur, dans lequel le signal de réception est appliqué à au moins un comparateur (10) qui vérifie, à chaque fois, le niveau dudit signal de réception concernant sa condition d'enclenchement et de déclenchement, une impulsion d'émission n'étant respectivement délivrée qu'après une première interrogation du comparateur (10) relative à l'application d'un signal parasite, et lorsqu'un tel signal n'est pas identifié, caractérisé par le fait que la sortie du comparateur (10) est raccordée à une entrée de signaux (12) d'un microcombinateur de commande (11) engendrant les impulsions d'émission après son activation, et différents niveaux de comparaison sont appliqués à l'entrée comparatrice du comparateur, avec succession dans le temps, lesdits niveaux étant engendrés par l'intermédiaire de résistances (R₁, R₂, R₃) connectées à une entrée dudit comparateur (10) et activées par des sorties de commutation correspondantes (H₁, H₂, H₃) du microcombinateur de commande (11).

2. Dispositif selon la revendication 1, caractérisé par le fait qu'une seconde interrogation du comparateur (10) a lieu après la délivrance de l'impulsion d'émission, et l'intervalle de temps jusqu'à la délivrance de l'impulsion d'émission suivante est réglé, dans le microcombinateur de commande (11), en fonction de l'identification de signaux parasites au cours des interrogations.

3. Dispositif selon la revendication 1 ou 2, caractérisé par le fait que la première interrogation du comparateur (10) est répétée, en présence d'un signal parasite, jusqu'à ce que plus aucun signal parasite ne soit appliqué.

4. Dispositif selon l'une des revendications 1-3, caractérisé par le fait que le temps Δt, durant lequel le signal parasite est appliqué au cours de la première interrogation, est mémorisé dans le microcombinateur de commande (11).

5. Dispositif selon l'une des revendications 2-4, caractérisé par le fait que l'intervalle de temps T, entre la délivrance de deux impulsions d'émission, est augmenté de l'intervalle de temps Δt dans le cas où un signal parasite de durée Δt est appliqué au cours de la première interrogation, et dans le cas où aucun signal parasite n'est appliqué au cours de la seconde interrogation.

6. Dispositif selon l'une des revendications 2-5, caractérisé par le fait que l'intervalle de temps, entre la délivrance de deux impulsions d'émission, est augmenté de l'intervalle de temps t_{HD} + Δt dans le cas où un signal parasite de durée Δt est appliqué au cours de la première interrogation, et dans le cas où un signal parasite est appliqué au cours de la seconde interrogation.

7. Dispositif selon la revendication 6, caractérisé par le fait que l'intervalle de temps t_{HD} est, pour l'essentiel, égal à l'intervalle de temps compris entre la fin de la première interrogation et le début de la seconde interrogation.

8. Dispositif selon l'une des revendications 1-7, caractérisé par l'agencement multiple dudit dispositif, en vue de la surveillance de l'espace.
